# NEUE EUROPÄISCHE PATENTSCHRIFT

(11) **EP 3 716 823 B2**
(45) Veröffentlichungstag und Bekanntmachung des Hinweises auf die Entscheidung über den Einspruch: **10.12.2025**
(45) Hinweis auf die Patenterteilung: 16.02.2022
(21) Anmeldenummer: 18829734.5
(22) Anmeldetag: 26.11.2018
(51) Int. Cl.: A47J 31/40, B67D 1/00

(54) **KARTUSCHENAUFNAHME, KARTUSCHENSYSTEM, GETRÄNKEZUBEREITUNGSMASCHINE UND VERFAHREN ZUR HERSTELLUNG EINES GETRÄNKS**
CARTRIDGE RECEPTACLE, CARTRIDGE SYSTEM, BEVERAGE PREPARATION MACHINE, AND METHOD FOR PRODUCING A BEVERAGE
LOGEMENT DE CARTOUCHE, SYSTÈME DE CARTOUCHE, MACHINE DE PRÉPARATION DE BOISSONS ET PROCÉDÉ DE PRÉPARATION D'UNE BOISSON

(30) Priorität: 27.11.2017 DE 102017221214
(43) Veröffentlichungstag der Anmeldung: 07.10.2020
(73) Patentinhaber: Freezio AG, 8580 Amriswil (CH)
(72) Erfinder: KRÜGER, Marc, 51467 Bergisch Gladbach (DE); FISCHER, Daniel, 8590 Romanshorn (CH); EMPL, Günter, 51429 Bergisch Gladbach (DE)
(74) Vertreter: Kutzenberger Wolff & Partner
(86) Internationale Anmeldenummer: PCT/EP2018/082553
(87) Internationale Veröffentlichungsnummer: WO 2019/101997

(56) Entgegenhaltungen:
- EP-A1- 1 762 163
- EP-A1- 2 017 219
- EP-A1- 2 017 221
- EP-A1- 2 345 354
- WO-A1-2011/084603
- WO-A1-2014/160346
- WO-A1-2017/121796
- WO-A2-2017/132452
- CA-A1- 2 935 180
- CN-A- 108 778 070
- DE-A1- 102005 048 164
- DE-A1- 102012 202 184
- DE-A1- 3 903 815
- US-A1- 2010 288 791

## Beschreibung

### Stand der Technik

Die vorliegende Erfindung geht aus von einem in eine Getränkezubereitungsmaschine einsetzbaren Kartuschensystem zur Herstellung eines Getränks, insbesondere eines Kaltgetränks, aufweisend eine Kartusche, die ein mit einer Getränkesubstanz gefülltes Reservoir aufweist, und eine mit der Kartusche reversibel verbindbare Kartuschenaufnahme, in welche die Kartusche reversibel einsetzbar ist, und mit einer Kartuschenentladeeinrichtung, welche ein zumindest teilweises Überführen der Getränkesubstanz vom Reservoir in eine Mischkammer bewirkt.

Solche Systeme sind aus dem Stand der Technik grundsätzlich bekannt und werden zur Herstellung von Getränken aus vorportionierten Kartuschen verwendet. Die Herstellung von Getränken mit solchen Systemen ist für den Anwender äußerst komfortabel, da er lediglich eine Kartusche einsetzen und einen Startknopf drücken muss. Die Getränkezubereitungsmaschine übernimmt dann vollautomatisiert die Erzeugung desselben, das heißt insbesondere, dass die Getränkesubstanz mit einer vorbestimmten Menge an Flüssigkeit, insbesondere kaltem und karbonisiertem Wasser vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann. Eine solche Kartusche ist im Dokument WO2017/121796 A1 offenbart.

Eine Herausforderung bei solchen Systemen ist, die Kartusche korrekt in der Kartuschenaufnahme einzusetzen. Versucht der Anwender Kartuschen verkantet oder verdreht in die Kartuschenaufnahme einzusetzen, besteht die Gefahr dass die Kartusche, Teile der Kartuschenaufnahme oder Teile der Kartuschenentladeeinrichtung beschädigt werden oder dass Getränkesubstanz aus der Kartusche ausläuft. Zudem wird die Anwenderzufriedenheit deutlich erhöht, wenn das Einlegen von Kartuschen schnell und reibungslos funktioniert.

Bei aus dem Stand der Technik bekannten Lösungen des Problems, wird der Anwender durch eine besondere geometrische Ausgestaltung der Kartusche und der Kartuschenaufnahme dazu gezwungen, die Kartusche korrekt einzusetzen. Dies kann, gerade bei eingeschränkter Sicht, hakelig und für den Anwender unbefriedigend sein.

### Offenbarung der Erfindung

Es ist daher eine Aufgabe der vorliegenden Erfindung eine Getränkezubereitungsmaschine, ein Kartuschensystem, ein Verfahren zur Herstellung eines Getränks durch Einsetzen des Kartuschensystems in eine Getränkezubereitungsmaschine zur Verfügung zu stellen, bei welchem das korrekte Positionieren der Kartusche in die Kartuschenaufnahme durch den Benutzer erleichtert und mögliche Fehlbedienungen verhindert werden.

Diese Aufgabe wird durch eine Getränkezubereitungsmaschine gemäß Anspruch 1 gelöst.

Die erfindungsgemäße Getränkezubereitungsmaschine hat gegenüber dem Stand der Technik den Vorteil, dass das Lichtelement der Halteeinheit den Bereich der Halteeinheit, in welchen die Kartuschenaufnahme vom Benutzer eingeführt wird, ausleuchtet. Dies erleichtert dem Benutzer das korrekte Einführen der Kartuschenaufnahme in die Halteeinheit deutlich. Durch eine optimale Ausleuchtung kann der Benutzer genau sehen, ob er die Kartuschenaufnahme wie vorgesehen in die Halteeinheit einlegt. Besonders vorteilhaft ist dies, wenn die Getränkezubereitungsmaschine an Orten mit schlechten Sichtverhältnissen, wie beispielsweise Diskotheken oder Bars, aufgestellt wird. Gerade hier herrscht oftmals Hektik bei der Bedienung der Getränkezubereitungsmaschinen und eine Fehlbedienung wäre wahrscheinlich. Die Ausleuchtung der Halteeinheit schafft hier ganz klare Vorteile gegenüber dem Stand der Technik. Eine gute Ausleuchtung ermöglicht eine gute optische Kontrolle des Einlegens der Kartuschenaufnahme in die Halteeinheit und damit signifikant weniger Verkanten oder Verdrehen beim Einlegen der Kartuschenaufnahme. Insbesondere könnten die Kartuschenaufnahmen so mit reflektierenden Markierungen versehen sein, dass dem Benutzer beim Einlegen der Kartuschenaufnahme durch Lichtreflexe die korrekte Lage der Kartuschenaufnahme angezeigt wird.

Weiterhin ergibt sich die Möglichkeit, die Kartusche durchsichtig zu gestalten. Das Lichtelement beleuchtet dann durch die Kartuschenaufnahme die Kartusche. Dies ermöglich dem Benutzer in vorteilhafter Weise den Füllstand der Getränkesubstanz im Reservoir der Kartusche zu kontrollieren. So kann der Benutzer sehen, wieviel Getränkesubstanz noch vorhanden ist und abschätzen, wie viele Getränke er noch herstellen kann ohne vorher die Kartusche tauschen zu müssen.

Ferner ist durch das Anleuchten der Getränkesubstanz möglich, Veränderungen der Getränkesubstanz zu erkennen. Beispielsweise können so Vertrübungen oder Ausflockungen in der Getränkesubstanz besser erkannt und damit Rückschlüsse auf die Haltbarkeit der Getränkesubstanz gezogen werden. Schimmelbildung oder andere Verunreinigungen der Getränkesubstanz sind mit der Ausleuchtung der Getränkesubstanz durch das Lichtelement leicht festzustellen. Ein weiterer Vorteil der Ausleuchtung der Kartusche ist die Kontrolle des Einblasens der Druckluft. Beim Aufsteigen der Druckluft durch die Getränkesubstanz bilden sich Luftblasen. Das durch die Getränkesubstanz auf die Luftblasen einfallende Licht wird an den Luftblasen gebrochen und reflektiert. Dadurch ist bei der Getränkezubereitung optisch erkennbar, ob die Druckluftzufuhr in das Reservoir funktioniert und ob somit der hygienische Betrieb der Getränkezubereitungsmaschine sichergestellt ist.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass das Lichtelement die in der Halteeinheit aufgenommene Kartuschenaufnahme vollständig umschließt, wobei sich das umlaufende Lichtelement dabei insbesondere innerhalb einer zur Längsachse der Kartusche senkrechten Horizontalebene erstreckt. Das vollständige Umschließen der Kartuschenaufnahme ermöglicht dem Lichtelement in vorteilhafter Weise die Beleuchtung von vollen 360° der Kartuschenaufnahme ohne dunkle Stellen. Dadurch ist die Kartuschenaufnahme gleichmäßig angeleuchtet und der Benutzer hat aus jedem Winkel zur Maschine eine optimale optische Kontrolle über den Einlegevorgang der Kartuschenaufnahme in die Halteeinheit. Die Lage des Lichtelements senkrecht zur Längsachse der Kartusche visualisiert in klarer Art und Weise die Ebene zum Einlegen der Kartuschenaufnahme mit der Hauptabstrahlrichtung des Lichtelements in Richtung der Normalen dieser Ebene. Da das Lichtelement in der betrachteten bevorzugten Ausführungsform die eingelegte Kartuschenaufnahme umschließt und damit von allen Seiten anleuchtet, wird dem Benutzer vom Lichtelement so die korrekte Richtung zum Einlegen der Kartuschenaufnahme in die Halteeinheit signalisiert.

Gemäß einer bevorzugten Ausführungsform der vorliegenden Erfindung ist vorgesehen, dass das Lichtelement eine Mehrzahl von LEDs aufweist, insbesondere LEDs unterschiedlicher Farben. LEDs haben sich bei der Gestaltung von Beleuchtungen als vorteilshaft erwiesen. Sie sind flexibel einsetzbar, langlebig, günstig und haben eine, im Vergleich zu anderen Leuchtmitteln, sehr geringe Leistungsaufnahme. Ferner emittieren LEDs bei vergleichsweise hohen Leuchtstärken nur wenig Wärme, was bei Ihrer Verwendung im Bereich der Zubereitung von Getränken äußerst vorteilhaft ist. So kann ein ungewolltes Heizen des zuzubereitenden Getränks vermieden werden. Das Verbauen von LEDs mit unterschiedlichen Farben erweist sich als besonders vorteilhaft. Durch gezieltes Mischen von verschiedenen Farben können dem Benutzer Betriebsparameter der Getränkezubereitungsmaschine signalisiert werden. So kann beispielsweise bei falsch eingesetzter Kartuschenaufnahme oder bei niedrigem Füllstand der Druckluftquelle rotes Licht vom Lichtelement emittiert werden.

Gemäß der vorliegenden Erfindung ist vorgesehen, dass das Lichtelement einen Leuchtstreifen und insbesondere ein LED-Streifen umfasst. Dies ermöglicht in vorteilhafter Weise das homogene Ausleuchten respektive Anleuchten der Halteeinheit, der Kartuschenaufnahme und der Kartusche. Ungewollter Schattenwurf kann so vermieden werden.

Gemäß einer bevorzugten Ausführungsform der vorliegenden Erfindung ist vorgesehen, dass die Halteeinheit ein Auslöseelement aufweist, um ein Aufstechmittel der Kartuschenaufnahme von einer eingefahrenen Position in eine ausgefahrene Position zu überführen. In der ausgefahrenen Position wird ein Aufstechdorn vom Aufstechmittel durch ein Dichtmittel, welches das Getränkemittelreservoir abschließt, gedrückt und perforiert dieses. Um das Getränkereservoir bei Nichtbenutzung abgeschlossen zu lassen und den Aufstechdorn vor Beschädigungen zu bewahren, wird dieser bei Nichtbenutzung nicht vom Aufstechmittel durch das Dichtmittel gedrückt, sondern ist in einer geschützen Position eingefahren. Für den Aufstechvorgang des Dichtelementes muss der Aufstechdorn jedoch ausgefahren werden. Dazu fährt das Aufstechmittel aus und verschiebt den Aufstechdorn in die ausgefahrene Position. Das Ausfahren des Aufstechmittels wird hier in vorteilhafter Weise von dem Auslöseelement der Halteeinheit eingeleitet. Durch die Trennung von Auslösemechanismus auf dem Halteelement einerseits und dem Aufstechmittel mit dem Aufstechdorn an der Kartuschenaufnahme andererseits ist gewährleistet, dass der Aufstechdorn nur ausfährt, wenn die Kartuschenaufnahme in die Halteeinheit eingesetzt wird. Denkbar wäre auch eine geometrische Codierung des Auslösemechanismus', so dass das Aufstechmittel nur ausgefahren wird, wenn eine, der Codierung des Auslösemechanismus' entsprechend codierte, Kartuschenaufnahme eingesetzt wird. Ferner ist es möglich, dass der Auslösemechanismus so positioniert ist, dass das Aufstechmittel nur ausfährt, wenn die Kartuschenaufnahme an der korrekten Stelle in das Halteelement eingesetzt ist. Weiterhin ist es möglich, dass der Auslösemechanismus so gestaltet ist, dass das Aufstechmittel nur ausfährt, wenn die Kartuschenaufnahme nicht schräg zur vorgesehenen Einsetzrichtung und/oder nicht weit genug in die Halteeinrichtung eingesetzt ist.

Gemäß einer bevorzugten Ausführungsform der vorliegenden Erfindung ist vorgesehen, dass die Halteeinheit einen Befestigungsflansch umfasst, welcher die Kartuschenaufnahme beim oder nach dem Einsetzen in die Halteeinheit formschlüssig und/oder kraftschlüssig umgreift. Mit der formschlüssigen und/oder kraftschlüssigen Verbindung der Halteeinheit mit der Kartuschenaufnahme über den Befestigungsflansch ist gewährleistet, dass die Kartuschenaufnahme sicher in der Halteeinheit sitzt. Der Befestigungsflansch kann Kräfte aufnehmen und abführen, welche auf die Kartuschenaufnahme wirken. Denkbar sind hier Kräfte die beim Betrieb der Getränkezubereitungsmaschine entstehen, hervorgerufen beispielsweise durch die anliegende Druckluft. Der Befestigungsflansch kann aber auch Kräfte aufnehmen und abführen, welche von außen auf die Kartuschenaufnahme einwirken. Denkbar wäre hier beispielsweise ein Anstoßen durch den Benutzer. Damit kann in vorteilhafter Weise der korrekte Sitz der Kartuschenaufnahme in der Halteeinheit sichergestellt werden.

Vorzugsweise ist vorgesehen, dass der Befestigungsflansch mit einer manuell oder motorisch betriebenen Auslösemechanik gekoppelt ist, welche zum Verschieben des Befestigungsflansches derart vorgesehen ist, dass eine Relativbewegung zwischen Kapselaufnahme und dem in Kontakt mit dem Aufstechmittel stehenden Auslöseelement erzeugt wird, wodurch der Aufstechdorn von der eingefahrenen Position in die ausgefahrene Position überführt wird. Die Kartuschenaufnahme wird von dem Befestigungsflansch also gegen das feststehende Auslöseelement bewegt, so dass das feststehende Auslöseelement gegen den Aufstechdorn drückt und diesen von der eingefahrenen Position in die ausgefahrene Position verfährt. Hierdurch wird die Dichtfolie perforiert und der Getränkeherstellungsprozess beginnt. Damit wird in vorteilhafter Weise sichergestellt, dass der Aufstechdorn dann ausgefahren wird, wenn die Kartuschenaufnahme in der zum Aufstechen des Dichtmittels vorgesehenen Position ist. So werden Beschädigungen des Aufstechdorns vermieden, welche beispielsweise durch ein Aufstechen neben dem Dichtmittel oder einen Kontakt zwischen dem Aufstechdorn und der zum Aufstechen vorgesehenen Stelle unter einem zum Aufstechen nicht vorgesehenen Winkel verursacht werden könnten.

Vorzugsweise ist vorgesehen, dass die Auslösemechanik einen Handhebel zur manuellen Betätigung derselben umfasst, wobei vorzugsweise der Handhebel um eine zur Längsachse der Kartusche im Wesentlichen parallele Drehachse drehbar ausgebildet ist. Die manuelle Betätigung der Auslösemechanik verringert in vorteilhafter Weise die Kraft, die zum Einlegen der Kartuschenaufnahme in die Halteeinheit nötig ist. Das Aufstechen des Dichtmittels mit dem Aufstechdorn erfordert eine gewisse Kraft. Mit Hilfe des Handhebels kann diese Kraft vom Benutzer angenehm und ergonomisch aufgebracht werden und ist nicht allein über das Einlegen der Kartuschenaufnahme in die Halteeinheit aufzubringen. Den Handhebel an einer zur Längsachse der Kartusche im Wesentlichen parallele Drehachse drehbar anzubringen ermöglicht eine vorteilhafte mechanische Hebelwirkung auf den Auslösemechanismus bei der Betätigung des Handhebels. Der Handhebel kann ferner mit einer rutschhemmenden Oberfläche und /oder Form versehen werden. Damit lässt sich die Auslösemechanik in besonders vorteilhafter Weise bedienen. Durch eine gute mechanische Kopplung des Benutzers an die Auslösemechanik kann diese mit besonders viel Feingefühl bedient und so das Aufstechmittel vor Beschädigungen geschützt werden.

Vorzugsweise ist vorgesehen, dass die Auslösemechanik ein Übersetzungsgetriebe umfasst, welches eine Drehbewegung des Handhebels um die zur Längsachse parallele Drehachse in eine zur Längsachse im Wesentlichen parallele Translationsbewegung und insbesondere in ein Anheben oder Absenken der Halteinheit und/oder Kartuschenaufnahme übersetzt. Dies ermöglicht in besonders vorteilhafter Weise die Kraftübertragung von der Betätigung des Handhebels auf das Aufstechen des Dichtmittels durch den Aufstechdorn. Die Drehbewegung des Handhebels führt zu einer geraden Relativbewegung zwischen Dichtmittel und Aufstechdorn. Damit kommt es zu keinem Verkanten während des Aufstechens.

Gemäß einer bevorzugten Ausführungsform der vorliegenden Erfindung ist vorgesehen, dass die Getränkezubereitungsmaschine einen Kennungsdetektor zum Auslesen einer Produktidentifikationskennung auf der Kartusche und/oder der Kartuschenaufnahme aufweist, wobei der Kennungsdetektor vorzugsweise oberhalb und/oder hinter der Halterung angeordnet ist. Vorzugsweise ist die Produktidentifikationskennung in einen Barcode, einen RFID-Code, einen QR-Code, einen Data-Matrix-Code, einen Farbcode, einen Hologrammcode oder dergleichen eingebettet. In vorteilhafter Weise wird somit ein automatisches Auslesen der Produktidentifikationskennung möglich. Der Kennungsdetektor umfasst insbesondere einen optischen Sensor, wie beispielsweise eine CCD-Kamera, welche den Barcode oder QR-Code oder Data-Matrix-Code automatisch ausliest, wenn die Kartusche in die Getränkezubereitungsmaschine eingesetzt ist. Alternativ umfasst der Kennungsdetektor eine Sende- und Empfangsantenne zum automatischen Auslesen der RFID-Codes. Alternativ wäre denkbar, dass die Produktidentifikationskennung auch in andere automatisch auslesbare Computerchips eingebettet wird. Der Begriff QR-Code umfasst im Sinne der vorliegenden Erfindung insbesondere jedweden Data-Matrix-Code. Insofern werden die Begriff QR-Code und Data-Matrix-Code synonym verwendet. Alternativ oder zusätzlich wäre auch denkbar, dass die Produktidentifikationskennung einen Strichcode, einen Punktcode, einen Binärcode, einen Morsecode, Braillezeichencode (Blindenschrift) oder dergleichen umfasst. Der Code kann dabei auch in eine dreidimensionale Struktur, wie beispielweise ein Relief eingebettet sein. Die Produktidentifikationskennung umfasst insbesondere die sogenannte Produktidentifikationsnummer, insbesondere einen Universal Product Code (UPC), eine European Article Number (EAN), einen GS1-Code, eine Global Trade Item Number (GTIN) oder dergleichen. Auf diese Weise braucht hierfür kein neues Codesystem eingeführt werden. Insbesondere läuft die Produktidentifikationskennung unter dem GS1-Standard.

Die Produktidentifikationskennung dient insbesondere dazu, die in der Kartusche befindliche Getränkesubstanz anzugeben. Während oder vor dem Start des Getränkezubereitungsprozesses wird die Produktidentifikationskennung mit dem Kennungsdetektor ausgelesen. Auf Seiten der Getränkezubereitungsmaschine ist somit bekannt, welche Art von Kartusche in die Getränkezubereitungsmaschine eingelegt ist. Denkbar ist, dass eine Auswerte- und Steuereinheit der Getränkezubereitungsmaschine eine Vielzahl von vorgespeicherten Getränkeherstellungsprogrammen aufweist, welche zur Zubereitung unterschiedlicher Getränke vorgesehen sind und sich beispielsweise in der Fördermenge, Förderzeit, Förderpausen, Temperatur, Karbonisierungsgrad und/oder Druck des zugeführten Fluids voneinander unterscheiden. Denkbar ist auch, dass bei verschiedenen Getränkeherstellungsprogrammen unterschiedliche Druckluftzufuhren Verwendung finden (bspw. anderer Druck). Jedes Getränkeherstellungsprogramm ist mit einem oder mehreren Produktidentifikationskennungen verknüpft. Wenn eine Kartusche in die Getränkezubereitungsmaschine eingelegt wird, wird die Produktidentifikationskennung auf der Kartusche mit dem Kennungsdetektor ausgelesen und anschließend mit den vorgespeicherten Daten verglichen. Anhand der Produktidentifikationskennung wird somit ein Getränkeherstellungsprogramm aus der Mehrzahl von vorgespeicherten Getränkeherstellungsprogrammen ausgewählt und anschließend der Getränkeherstellungsprozess mit dem ausgewählten Getränkeherstellungsprogramm gestartet. Die Parameter wie Fördermenge, Förderzeit, Förderpausen, Temperatur, Karbonisierungsgrad und/oder Druck des zugeführten Fluids werden durch das ausgewählte Getränkeherstellungsprogramm vorgegeben bzw. gesteuert, um für das mit der jeweiligen Getränkesubstanz herzustellende Getränk optimale Ergebnisse zu erzielen.

Denkbar ist, dass der Getränkeherstellungsprozess gar nicht erst startet, wenn keine Produktidentifikationskennung identifizierbar ist oder die identifizierte Produktidentifikationskennung zu keinem vorgespeicherten Getränkeherstellungsprogramm passt. Auf diese Weise wird verhindert, dass eine systemfremde Kartusche in der Getränkeherstellungsmaschine verwendet wird, welche für den Betrieb in der Getränkeherstellungsmaschine nicht zertifiziert ist und somit die Gefahr einer Beschädigung der Getränkeherstellungsmaschine oder einer Gefährdung des Benutzers, beispielsweise durch ein Aufplatzen der Kartusche (wenn diese für den Betrieb bei geringeren Drücken vorgesehen ist), bestünde.

Die Produktidentifikationskennung ist vorzugsweise auf die Wandung der Kartusche oder auf das Dichtelement (insbesondere die Dichtfolie) zum Abdichten der Kartuschenöffnung aufgedruckt oder aufgeklebt. Insbesondere ist die Produktidentifikationskennung derart auf der Kartusche positioniert, dass die Produktidentifikationskennung innerhalb des Detektionsbereichs des Kennungsdetektors der Getränkezubereitungsmaschine angeordnet ist, wenn die Kartusche in die Getränkezubereitungsmaschine eingesetzt ist. Alternativ wäre auch denkbar, dass die Produktidentifikationskennung nicht auf der Kartusche, sondern auf einer Außenwandung der Kartuschenaufnahme entsprechend angeordnet ist.

Denkbar ist auch, dass die Auswerte- und Steuereinheit der Getränkezubereitungsmaschine registriert, welche Kartuschen und/oder wieviele Kartuschen von einer bestimmten Sorte verwendet wurden. Vorzugsweise weist die Getränkezubereitungsmaschine ein Kommunikationsmodul auf, welches eine Kommunikation zwischen der Getränkezubereitungsmaschine und einem zentralen Diensteanbieter mittels einer Internetverbindung bereitgestellt wird. Der zentrale Diensteanbieter kann beispielsweise ein Server des Herstellers der Getränkezubereitungsmaschine sein, der den Status der Getränkezubereitungsmaschine aus der Ferne überwacht und/oder die Getränkezubereitungsmaschine wartet, überwacht und/oder ggf. repariert. Denkbar ist, dass der zentrale Diensteanbieter beispielsweise die Firmware oder Software der Getränkezubereitungsmaschine prüfen und ggf. aktualisieren kann und/oder die Getränkezubereitungsmaschine neu starten kann. Auch ist denkbar, dass neue Getränkeherstellungsprogramme eingespielt werden (wenn bspw. neue Kartuschen auf den Markt kommen) und/oder die Parameter wie Fördermenge, Förderzeit, Förderpausen, Temperatur, Karbonisierungsgrad und/oder Druck des zugeführten Fluids angepasst werden. Vorzugsweise weist die Getränkeherstellungsmaschine eine Mehrzahl von Sensoren auf, welche von dem zentralen Diensteanbieter auslesbar sind, so dass beispielsweise der Verschmutzungsgrad, der Abnutzungsgrad, die Filterzustände, der Pumpendruck und dergleichen überwacht werden können. Ferner ist denkbar, dass Betriebsparameter der Getränkezubereitungsmaschine ausgelesen werden, welche Aufschluss über die Anzahl an bereits durchgeführten Getränkeherstellungsprozessen ermöglicht. Dabei ist bspw. denkbar, dass die Auswerte- und Steuereinheit Daten an den zentralen Diensteanbieter übermittelt, aus welchen hervorgeht welche und wie viele Kartuschen einer bestimmten Sorte verwendet wurden, so dass beispielsweise gezielte Werbung (zum Beispiel auf dem Display der Getränkeherstellungsmaschine) für die bevorzugten Getränke geschaltet werden kann und/oder automatische Nachbestellungen für die verbrauchten Kartuschen einspielbar sind. Vorzugsweise kann über das Display der Getränkeherstellungsmaschine eine Nachbestellung von Kartuschen erfolgen, welche über das Kommunikationsmodul direkt an den zentralen Diensteanbieter übermittelt wird. Ferner ist denkbar, dass eine Sprachsteuerung der Getränkeherstellungsmaschine implementiert ist, wobei die Sprachdaten zur Steuerung der Maschine von einem Mikrophon der Getränkeherstellungsmaschine aufgenommen und sodann zur Auswertung derselben über das Kommunikationsmodul an den zentralen Diensteanbieter übermittelt werden. Ferner ist denkbar, dass die Getränkeherstellungsmaschine eine benutzersensitiven Betriebsmodus mit bspw. personifizierten Menüs oder Einstellung, welche beispielsweise individuell ausgewählte Parametern oder Getränkeherstellungsprogrammen umfassen, bereitstellt, wobei die Benutzerauswahl anhand eines Passworts oder biometrischen Daten, wie Gesichtserkennung, Iris-Scan oder Fingerabdruck erfolgt. Die erhobenen Daten werden insbesondere verschlüsselt an den zentralen Diensteanbieter übermittelt oder dort zur Freischaltung oder Übermittlung des personifizierten Menüs an die entsprechenden Getränkeherstellungsmaschine ausgewertet. Denkbar ist, dass der Benutzer somit an verschiedenen Getränkeherstellungsmaschinen immer sein individuelles Menü und/oder seine individuellen Einstellungen automatisch laden kann.

Vorzugsweise ist vorgesehen, dass das Lichtelement derart ausgebildet, angeordnet und/oder ausgerichtet ist, dass ein vom Lichtelement ausgehender Lichtkegel einen Erfassungsbereich des Kennungsdetektors und insbesondere die auf der Kartusche und/oder der Kartuschenaufnahme ausgebildete Produktidentifikationskennung ausleuchtet. Die Produktidentifikationskennung kann eine optisch auszulesende Kennung sein. Um das optische Auslesen in vorteilhafter Weise aktiv zu unterstützen, leuchtet das Lichtelement hier die auszulesende Produktidentifikationskennung aus. Dies verringert Fehler und Störungen beim Auslesen, insbesondere bei sonst schlechten Lichtverhältnissen.

Gemäß einer bevorzugten Ausführungsform der vorliegenden Erfindung ist vorgesehen, dass das Lichtelement derart ausgebildet, angeordnet und/oder ausgerichtet ist, dass ein vom Lichtelement ausgehender Lichtkegel die Kartusche und insbesondere das Reservoir ausleuchtet. Dies ermöglicht dem Benutzer in vorteilhafter Weise die eingelegte Kartusche zu kontrollieren. Hierbei erhält er selbst bei sonst dunkler Umgebung, wie beispielsweise in Diskotheken oder Bars üblich, Information darüber, welche Getränkesubstanz in der eingelegten Kartusche befindlich ist, Informationen über den Füllstand des Reservoirs oder auch eine Rückmeldung über die Funktionszustand der Druckluftversorgung über in der Getränkesubstanz aufsteigende Druckluftblasen. Insbesondere die Darstellung der Druckluftblasen in der Getränkesubstanz zur Kontrolle der Druckluftversorgung ist über das Einstrahlen von Licht vom Lichtelement in das Reservoir durch Reflektion und Brechung des Lichtes an den Druckluftblasen in besonders vorteilhafter Weise möglich.

Gemäß einer bevorzugten Ausführungsform der vorliegenden Erfindung ist vorgesehen, dass die Getränkezubereitungsmaschine eine Steuereinheit aufweist, welche das Lichtelement in Abhängigkeit einer vom Kennungsdetektor ausgelesenen Produktidentifikationskennung steuert. Denkbar ist hier über die Farbe des vom Lichtelement emittierten Lichtes darzustellen, welche Getränkesubstanz im Reservoir der eingelegten Kartusche enthalten ist. Ferner ist denkbar, farblich oder über ein zeitliche Lichtpulse Informationen ein über überschrittenes Haltbarkeitsdatum, welches in der Produktidentifikationskennung enthalten sein könnte, darzustellen. Somit wird dem Benutzer in vorteilhafter Weise die Bedienung der Getränkezubereitungsmaschine erleichtert, indem er aktiv optisch über die eingesetzte Getränkesubstanz informiert wird. Dies verhindert die Zubereitung von falschen oder verdorbenen Getränken in schlecht beleuchteten Umgebungen.

Ein weiterer Gegenstand der vorliegenden Erfindung zur Lösung der eingangs gestellten Aufgabe ist ein System aufweisend eine Getränkezubereitungsmaschine nach einem der Ansprüche 1 bis 8 und ein in die Halteeinheit einsetzbares Kartuschensystem mit einer Kartusche und einer mit der Kartusche verbundenen Kartuschenaufnahme.

Gemäß einer bevorzugten Ausführungsform der vorliegenden Erfindung ist vorgesehen, dass die Kartuschenaufnahme eine Dornführung und ein innerhalb der Dornführung verschiebbar gelagertes Aufstechmittel in Form eines Aufstechdorns umfasst, wobei der Aufstechdorn zwischen einer eingefahrenen Position, in welcher der Aufstechdorn von einem Dichtelement der Kartusche beabstandet ist, und einer ausgefahrenen Position, in welcher der Aufstechdorn das Dichtelement durchsticht und bis in das Reservoir ragt, verschiebbar ist, wobei die Außenwandung des Aufstechdorns wenigstens einen Seitenkanal zum Leiten der Getränkesubstanz in Richtung der Mischkammer, wenn das Dichtelement durchstochen ist, aufweist. Damit ist gewährleistet, dass die Fluidzuführung nicht in das Reservoir der Kartusche, sondern in die vom Reservoir separierte Mischkammer mündet. Hierdurch wird wirksam und in einer einfach und kostengünstig zu realisierenden Weise verhindert, dass durch die Fluidzuführung eine Rückkontamination der Getränkezubereitungsmaschine erfolgt. Hierfür wird das Reservoir nicht von dem Fluid durchspült, sondern gemäß der vorliegenden Erfindung gelangen die Getränkesubstanz und das Fluid getrennt voneinander in die Mischkammer. Das Fluid wird direkt in die Mischkammer geleitet, während die Getränkesubstanz durch die Kartuschenentladeeinrichtung und unabhängig vom Fluid in die Mischkammer überführt wird. Zu diesem Zweck weist die erfindungsgemäße Kartuschenaufnahme ferner den in der Dornführung verschiebbar gelagerten Aufstechdorn auf. Der Aufstechdorn ist im Ausgangszustand der Kartuschenaufnahme in einer eingefahrenen Position und kann zum Öffnen eines Dichtelements der Kartusche von der eingefahrenen Position in die ausgefahrene Position überführt werden. In der ausgefahrenen Position wird das Dichtelement von dem Aufstechdorn perforiert, so dass die Getränkesubstanz durch den wenigstens einen Seitenkanal an dem Dichtelement vorbei in die Mischkammer gelangt. Zuvor ist das Reservoir mittels des Dichtelements insbesondere luft- und flüssigkeitsdicht verschlossen. Es wird somit eine einfache und zuverlässige Öffnung einer zuvor aromadicht verschlossenen Kartusche in einer Getränkezubereitungsmaschine ermöglicht. Zudem hat sich gezeigt, dass eine Rücckontamination der Getränkezubereitungsmaschine in einer im Vergleich zum Stand der Technik deutlich wirksameren Art und Weise unterbunden wird, insbesondere da im Reservoir kein direkt auf die Fluidzuführung wirkender Überdruck erzeugt wird. Die Ausbildung der Mischkammer in der Kartuschenaufnahme, die in die Getränkezubereitungsmaschine reversibel einsetzbar ist, sorgt vorteilhafterweise dafür, dass die Mischkammer Teil des austauschbaren Kartuschensystem ist. Auf diese Weise wird eine Verunreinigung der Getränkezubereitungsmaschine durch die Getränkesubstanz wirksam vermieden, weil lediglich Teile des austauschbaren Einweg- oder Mehrwegkartuschensystems mit der Getränkesubstanz in Kontakt gelangen.

Gemäß einer bevorzugten Ausführungsform der vorliegenden Erfindung ist vorgesehen, dass der Aufstechdorn eine integrierte Druckluftleitung aufweist, wobei sich die Druckluftleitung entlang des Aufstechdorns von einem ersten Ende des Aufstechdorns bis zu einem zweiten Ende des Aufstechdorns erstreckt, wobei am zweiten Ende der Druckluftanschluss zum Anschluss an eine Druckluftquelle und am ersten Ende ein Druckluftauslass zum Einblasen von Druckluft in das Reservoir ausgebildet sind.

In vorteilhafter Weise sind somit drei Funktionen in den Aufstechdorn integriert: 1. Der Aufstechdorn perforiert das Dichtelement und öffnet somit die Kartusche 2. Der Aufstechdorn umfasst wenigstens einen Seitenkanal, um ein Überführen der Getränkesubstanz in die Mischkammer zu ermöglichen 3. Der Aufstechdorn umfasst die integrierte Druckluftleitung, welche eine Kartuschenentladeeinrichtung ist, um Druckluft in das Reservoir zu blasen, wodurch die Getränkesubstanz unter Druck in die Mischkammer gedrückt wird. Die in die Kartuschenaufnahme integrierte Kartuschenentladeeinrichtung umfasst im Sinne der vorliegenden Erfindung also zunächst nur eine Druckluftleitung, durch welche Druckluft von außen in das Reservoir eingeleitet werden kann. Die Kartuschenaufnahme ist derart ausgebildet, dass durch die Druckluft die Getränkesubstanz aus dem Reservoir in die Mischkammer gedrückt wird. Die Druckluft wird insbesondere von der Getränkezubereitungsmaschine bereitgestellt. Denkbar ist, dass eine Druckluftquelle direkt an den Druckluftanschluss angekoppelt wird, sobald das Kartuschensystem in die Getränkezubereitungsmaschine eingesetzt wird. Dies hat den Vorteil, dass eine Rückkontamination in Richtung der Getränkezubereitungsmaschine wirksam vermieden wird, weil die Kartuschenentladeeinrichtung sofort beim Einsetzen des Kartuschensystems unter Druck steht und somit verhindert wird, dass Getränkesubstanz in Richtung der Druckluftleitung und insbesondere in Richtung der Druckluftquelle der Getränkezubereitungsmaschine wandert. Die Getränkesubstanz kann sich ausgehend vom Reservoir somit lediglich in Richtung der Mischkammer bewegen.

Gemäß einer bevorzugten Ausführungsform der vorliegenden Erfindung ist vorgesehen, dass der Aufstechdorn eine Mehrzahl von Seitenkanälen aufweist, wobei sich jeder Seitenkanal parallel zum Aufstechdorn erstreckt und wobei die Seitenkanäle jeweils in Form einer in die Außenfläche des Aufstechdorns eingebrachte einseitig offene Nut ausgebildet sind. Vorzugsweise sind die Seitenkanäle zumindest teilweise in einem zur Schnittfläche rückwärtigen Umfangsbereich des Aufstechdorns ausgebildet. Dies hat den Vorteil, dass die Seitenkanäle an derjenigen Seite der Dichtelementperforation angeordnet sind, an welcher ein Schnitt im Material erzeugt wurde, und nicht an der gegenüberliegenden Seite, an welcher das abgeschnittene Material noch mit dem übrigen Dichtelement verbunden ist. Die Getränkesubstanz kann somit vergleichsweise ungehindert in die Seitenkanäle einströmen.

Denkbar ist, dass der Querschnitt der Seitenkanäle und/oder die Anzahl der Seitenkanäle an die Viskosität der Getränkesubstanz angepasst ist, so dass die Seitenkanäle den Fluss der Getränkesubstanz in Richtung Mischkammer kontrollieren bzw. begrenzen. Bei einer hohen Viskosität werden mehrere Seitenkanäle oder Seitenkanäle mit größerem Querschnitt verwendet, während bei einer niedrigeren Viskosität weniger Seitenkanäle oder Seitenkanäle mit geringerem Querschnitt vorgesehen sind. Für jede Kartusche existiert somit eine passende Kartuschenaufnahme.

Gemäß einer bevorzugten Ausführungsform der vorliegenden Erfindung ist vorgesehen, dass die Mischkammer einen Getränkeauslauf aufweist, durch welchen das aus einer Vermischung der Getränkesubstanz mit dem Fluid gebildete Getränk abgegeben wird, wobei die Kartuschenaufnahme vorzugsweise derart ausgebildet ist, dass das Getränk aus dem Getränkeauslauf direkt in ein portables Gefäß einleitbar ist. In vorteilhafter Weise gerät somit weder die Getränkesubstanz noch das erzeugte Getränk in Kontakt mit einem Teil der Getränkezubereitungsmaschine, so dass nahezu jegliche (Rück-)Kontamination der Getränkezubereitungsmaschine verhindert wird. Das Fluid wird der Mischkammer separat zugeführt. Vorzugsweise wird das Fluid unter Druck in die Mischkammer eingeleitet. Das Fluid wird insbesondere von der Getränkezubereitungsmaschine bereitgestellt. Denkbar ist, dass eine Fluidquelle direkt an einen entsprechenden Fluidanschluss der Kartuschenaufnahme angekoppelt wird, sobald das Kartuschensystem in die Getränkezubereitungsmaschine eingesetzt wird. Der Fluidanschluss steht dabei über eine Fluidleitung in Fluidverbindung mit der Mischkammer. Dies hat den Vorteil, dass eine Rückkontamination in Richtung der Getränkezubereitungsmaschine wirksam vermieden wird, weil der Fluidanschluss sofort beim Einsetzen des Kartuschensystems unter Druck steht und somit verhindert wird, dass Getränkesubstanz in Richtung der Fluidleitung und insbesondere in Richtung der Fluidquelle der Getränkezubereitungsmaschine wandert. Die Getränkesubstanz und das Getränk kann sich ausgehend von der Mischkammer somit lediglich in Richtung des Getränkeauslasses bewegen. Das Fluid umfasst insbesondere Wasser, vorzugsweise unter Druck stehendes, gekühltes und/oder karbonisiertes Trinkwasser. Vorstellbar wäre, den Getränkeauslauf mit einem Verschluss zur versehen, welcher den Getränkeauslauf nach Benutzung verschließt. So könnte ein Nachtropfen des hergestellten Getränks aus dem Getränkeauslauf vermieden werden. Ferner ist es vorstellbar, dass der Getränkeauslauf schwenkbar und/oder in der Höhe verstellbar ist. Damit könnte der Getränkeauslauf auf die Geometrie des portablen Gefäßes eingestellt werden.

Gemäß einer bevorzugten Ausführungsform der vorliegenden Erfindung ist vorgesehen, dass die Kartusche eine Produktidentifikationskennung aufweist, die insbesondere in einen Barcode, einen RFID-Code, einen QR-Code, einen Data-Matrix-Code, einen Farbcode oder einen Hologrammcode eingebettet ist. In vorteilhafter Weise wird somit ein automatisches Auslesen der Produktidentifikationskennung möglich. Die Produktidentifikationskennung dient insbesondere dazu, die in der Kartusche befindliche Getränkesubstanz anzugeben. Denkbar ist, dass anhand der Produktidentifikationskennung Betriebsparameter der Getränkezubereitungsmaschine, wie beispielsweise Fördermenge, Förderzeit, Förderpausen, Temperatur, Karbonisierungsgrad und/oder Druck des zugeführten Fluids und/oder der zugeführten Druckluft eingestellt werden. Dies geschieht in einer Auswerte- und Steuereinheit der Getränkezubereitungsmaschine, welche eine Vielzahl von vorgespeicherten Getränkeherstellungsprogrammen aufweist, die sich in den Betriebsparametern der Getränkezubereitungsmaschine unterscheiden. Jedes Getränkeherstellungsprogramm ist mit einem oder mehreren Produktidentifikationskennungen verknüpft. Beim Einlegen der Kartusche wird die Produktidentifikationskennung mit dem Kennungsdetektor ausgelesen. Die Auswerte- und Steuereinheit wählt dann das der Produktidentifikationskennung entsprechende Getränkeherstellungsprogramm aus. So können für jedes herzustellende Getränk optimale Betriebsparameter eingestellt werden.

Ferner ist denkbar, dass der Getränkeherstellungsprozess gar nicht erst startet, wenn keine Produktidentifikationskennung identifizierbar ist oder die identifizierte Produktidentifikationskennung zu keinem vorgespeicherten Getränkeherstellungsprogramm passt. Auf diese Weise wird verhindert, dass eine systemfremde Kartusche in der Getränkeherstellungsmaschine verwendet wird, welche für den Betrieb in der Getränkeherstellungsmaschine nicht zertifiziert ist und somit die Gefahr einer Beschädigung der Getränkeherstellungsmaschine oder einer Gefährdung des Benutzers, beispielsweise durch ein Aufplatzen der Kartusche (wenn diese für den Betrieb bei geringeren Drücken vorgesehen ist), bestünde.

Die Produktidentifikationskennung ist vorzugsweise auf die Wandung der Kartusche oder auf das Dichtelement (insbesondere die Dichtfolie) zum Abdichten der Kartuschenöffnung aufgedruckt oder aufgeklebt. Insbesondere ist die Produktidentifikationskennung derart auf der Kartusche positioniert, dass die Produktidentifikationskennung innerhalb des Detektionsbereichs des Kennungsdetektors der Getränkezubereitungsmaschine angeordnet ist, wenn die Kartusche in die Getränkezubereitungsmaschine eingesetzt ist. Alternativ wäre auch denkbar, dass die Produktidentifikationskennung nicht auf der Kartusche, sondern auf einer Außenwandung der Kartuschenaufnahme entsprechend angeordnet ist.

Ein weiterer Gegenstand der vorliegenden Erfindung ist ein Verfahren zur Herstellung eines Getränks mit einem System nach einem der Ansprüche 9 oder 10, mit den folgenden Schritten:
- Einsetzen des Kartuschensystems in die Halteeinheit der Getränkezubereitungsmaschine,
- Ausleuchten des Reservoirs und/oder der Produktidentifikationskennung mittels des Lichtelements,
- Herstellen einer Fluidverbindung zwischen einer Fluidquelle der Getränkezubereitungsmaschine und der Fluidzuführung der Kartuschenaufnahme,
- Herstellen einer Druckluftverbindung zwischen einer Druckluftquelle der Getränkezubereitungsmaschine und des Druckluftanschlusses der Kartuschenaufnahme,
- Perforieren des Dichtelements durch Überführen des Aufstechdorns von der eingefahrenen Position in die ausgefahrene Position,
- Überführen der Getränkesubstanz von dem Reservoir in die Mischkammer durch Einspeisen von Druckluft in das Reservoir,
- Einspeisen eines Fluides in die Mischkammer durch die Fluidzuführung und Ableiten des in der Mischkammer durch Vermischung der Getränkesubstanz mit dem Fluid erzeugten Getränks mittels eines Getränkeauslaufs.

Die vorstehend aufgeführten Verfahrensschritte sind nicht als zwingende zeitliche Abfolge zu betrachten, sondern können auch gleichzeitig oder in anderer Reihenfolge erfolgen. Vorzugsweise werden beispielsweise die Betätigung der Kartuschenentladeeinrichtung und die Einspeisung des Fluides parallel durchgeführt.

Gemäß einer bevorzugten Ausführungsform der vorliegenden Erfindung ist vorgesehen, dass vor dem Herstellen der Fluid- und/oder Druckluftverbindung und/oder vor dem Perforieren des Dichtelements eine Produktidentifikationskennung von einem Kennungsdetektor ausgelesen und von einer Steuerungseinheit ausgewertet und insbesondere verifiziert wird, wobei vorzugsweise die Produktidentifikationskennung während des Auslesens von dem Lichtelement ausgeleuchtet wird. Durch das Auslesen der Produktidentifikationskennung können Betriebsparameter wie beispielsweise Temperatur oder Karbonisierungsgrad des Fluids oder der Betriebsdruck der Druckluftverbindung eingestellt werden. Ferner kann durch Auslesen der Produktidentifikationskennung vom Kennungsdetektor erkannt werden, ob die Kartusche für die Verwendung mit der Getränkezubereitungsmaschine vorgesehen ist. Sollte dies nicht der Fall sein, könnte das Perforieren des Dichtmittels unterbleiben und so der Aufstechdorn vor Beschädigungen durch beispielsweise ein ungeeignetes Dichtmittel geschützt werden. Eine Ausleuchtung der Produktidentifikationskennung erleichtert zudem das optische Auslesen.

Gemäß einer bevorzugten Ausführungsform der vorliegenden Erfindung ist vorgesehen, dass das Fluid vor dem Einspeisen in die Mischkammer gekühlt und/oder karbonisiert wird. Somit sind Kaltgetränke und kohlensäurehaltige Kaltgentränke herstellbar.

Gemäß einer bevorzugten Ausführungsform der vorliegenden Erfindung ist vorgesehen, dass der Aufstechdorn von einem Auslöseelement der Getränkezubereitungsmaschine von der eingefahrenen Position in die ausgefahrene Position überführt wird, wobei die Kartuschenaufnahme vorzugsweise derart gegen das feststehende Auslöseelement bewegt wird, dass der Aufstechdorn von der eingefahrenen Position in die ausgefahrene Position überführt wird. Damit perforiert der Aufstechdorn das Dichtmittel. In vorteilhafter Weise wird das Reservoir somit automatisch geöffnet, so dass ein Überführen der Getränkesubstanz in die Mischkammer erfolgen kann. Denkbar ist, dass während des Öffnungsvorgangs bereits Druckluft und Fluid in die Kartuschenaufnahme eingeleitet wird, so dass eine Rückkontamination der Getränkezubereitungsmaschine durch Getränkesubstanz verhindert wird.

Gemäß einer bevorzugten Ausführungsform der vorliegenden Erfindung ist vorgesehen, dass die Kartuschenaufnahme beim oder nach dem Einsetzen des Kartuschensystems in die Halteeinheit von einem Befestigungsflansch der Halteeinheit umgriffen wird und wobei der Befestigungsflansch von einer manuell oder motorisch betriebenen Auslösemechanik derart betrieben und insbesondere verschoben wird, dass eine Relativbewegung zwischen der Kapselaufnahme und dem in Kontakt mit dem Aufstechdorn stehenden Auslöseelement erzeugt wird, wodurch der Aufstechdorn von der eingefahrenen Position in die ausgefahrene Position überführt wird. Dadurch wird in vorteilhafter Weise bewirkt, dass zum einen Kräfte, die auf das Kartuschensystem wirken, wie beispielsweise Druck durch den Benutzer beim Einlegevorgang, von dem Befestigungsflansch aufgenommen und abgeführt werden. Zum anderen wird dadurch bewirkt, dass der Aufstechdorn von einer geschützten eingefahrenen Position in eine ausgefahrene Position zum Perforieren des Dichtmittels des Reservoirs ausgefahren wird, wenn die Kartuschenaufnahme in der richtigen Position ist. Durch das Perforieren des Dichtmittels wird die Getränkeherstellung gestartet.

Gemäß einer bevorzugten Ausführungsform der vorliegenden Erfindung ist vorgesehen, dass das Lichtelement erst eingeschaltet oder auf eine bestimmte Farbe oder Helligkeit geschaltet wird, wenn das Kartuschensystem in die Halteinheit eingesetzt oder in der Halteeinheit verriegelt wird. Dadurch wird dem Benutzer in vorteilhafter Weise signalisiert, dass das Kartuschensystem korrekt in die Halteeinheit eingesetzt ist und die Getränkezubereitungsmaschine zur Getränkeherstellung bereit ist. Schaltet das Lichtelement sich nicht ein oder ändert seien Farbe oder Helligkeit, so kann der Benutzer das Kartuschensystem erneut einsetzen und den Fehler korrigieren. Ferner kann so bei Nichtbenutzung Energie eingespart werden. Denkbar ist auch, dass vor dem Einsetzen des Kartuschensystems das Lichtelement so leuchtet, dass es ein korrektes Einlegen des Kartuschensystems erleichtert.

Gemäß einer bevorzugten Ausführungsform der vorliegenden Erfindung ist vorgesehen, dass das Lichtelement und insbesondere die Farbe und/oder Helligkeit des Lichtelements in Abhängigkeit der Auswertung der Produktidentifikationskennung durch die Steuerungseinheit geschaltet wird. Dies ermöglicht es, dem Benutzer zu signalisieren, ob die eingelegte Kartusche zur Verwendung mit der Getränkezubereitungsmaschine vorgesehen ist. Ist dies nicht der Fall, könnte der Benutzer so eine andere Kartusche, welche zur Verwendung mit der Getränkezubereitungsmaschine vorgesehen ist, einlegen und damit mögliche Beschädigungen an der Getränkezubereitungsmaschine verhindern. Weiterhin können so dem Benutzer in vorteilhafter Weise Informationen über die Art der verwendeten Getränkesubstanz und/oder über die anhand der ausgelesenen Produktidentifikationskennung gewählten Betriebsparameter mitgeteilt werden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

Kurze Beschreibung der Zeichnungen
- Figuren 1a und 1b: zeigen schematische Darstellungen der Getränkezubereitungsmaschine ohne eingesetzte Kartuschenaufnahme gemäß einer beispielhaften Ausführungsform der vorliegenden Erfindung.
- Figuren 2a bis 2c: das Grundprinzip des Verfahrens zur Herstellung eines Getränks mit einer Kartuschenaufnahme und einem Kartuschensystem eingesetzt in eine Getränkezubereitungsmaschine gemäß einer beispielhaften Ausführungsform der vorliegenden Erfindung.
- Figuren 3a bis 3c: zeigen schematische Ansichten einer Kartuschenaufnahme und eines Kartuschensystems gemäß einer beispielhaften Ausführungsform der vorliegenden Erfindung.
- Figur 4: zeigt eine schematische Ansicht einer Halteeinheit einer Getränkezubereitungsmaschine gemäß einer beispielhaften Ausführungsform der vorliegenden Erfindung.
- Figur 5: zeigt eine schematische Ansicht einer Kartuschenaufnahme einer beispielshaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

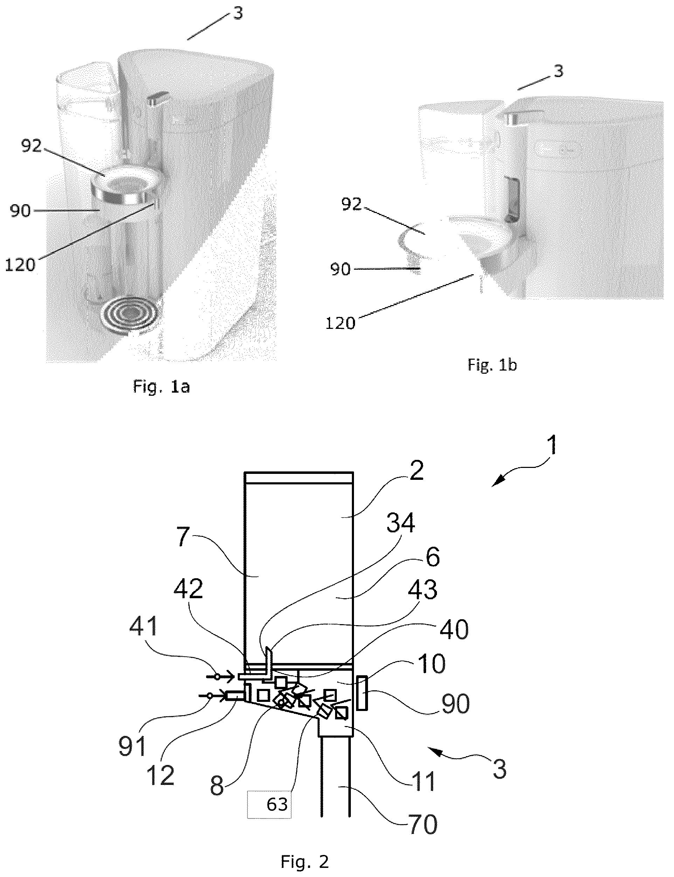

Die **Figuren 1a und 1b** zeigen schematische Darstellungen der Getränkezubereitungsmaschine 3 ohne eingesetzte Kartuschenaufnahme 10 gemäß einer beispielhaften Ausführungsform der vorliegenden Erfindung.

Die Getränkezubereitungsmaschine 3 weist eine Halteeinheit 90 zur Aufnahme eines Kartuschensystems 10 auf (siehe Figur 2). Die Halteeinheit weist ein Lichtelement (92) zur Beleuchtung der Kartuschenaufnahme 10, der Kartusche 2 und des Reservoirs 6 mit Getränkesubstanz 7 auf. Das Lichtelement 92 ist als LED-Streifen ausgeführt und so gestaltet, dass es die eingesetzte Kartuschenaufnahme 10 umfasst. Die Farbe und die Helligkeit des vom Lichtelement 92 emittierten Lichtes sind steuerbar. Die Halteeinheit weist ferner einen Handhebel 120 zur manuellen Betätigung eines Auslösemechanismus' zum Ausfahren eines Austechdorns 73 der Kartuschenaufnahme 10 zum Aufstechen eines Dichtmittels 18 auf. Der Handhebel 120 umfasst das Lichtelement 92 als Ring und ist um die Mittelpunktsachse des Rings rotierbar. Rotiert der Benutzer den Ring, so wird der Auslösemechanismus zum Ausfahren des Aufstechdorns betätigt.

In **Figur 2** ist eine schematische Schnittbildansicht eines erfindungsgemäßen Kartuschensystems 1, welche in eine Getränkezubereitungsmaschine 3 eingesetzt ist und mittels welcher ein Getränk 70 zubereitet wird, gezeigt, um das allgemeine Funktionsprinzip zu illustrieren.

Das vorliegende System umfasst die Getränkezubereitungsmaschine 3 (nur schematisch illustriert), in welche austauschbare Kartuschensysteme 1 einsetzbar sind. Jedes Kartuschensystem 1 weist eine Kartusche 2, die mit einer bestimmten Getränkesubstanz 7 gefüllt ist, und eine mit der Kartusche 2 verbundene Kartuschenaufnahme 10 auf. Innerhalb der Getränkezubereitungsmaschine 3 wird mit Hilfe der Getränkesubstanz 7 und einer zusätzlichen Wasserquelle, im Folgenden als Fluidquelle 41 bezeichnet, ein entsprechendes Getränk 70 erzeugt. Die Kartusche 2 ist dabei vorzugsweise mit einer vorportionierten Menge an Getränkesubstanz 7, die zur Erzeugung einer gezielten Trinkportion, beispielsweise eine Trinkglasfüllung des gewünschten Getränks 70, notwendig ist, befüllt. Es stehen insbesondere eine Mehrzahl unterschiedlicher Kartuschensysteme 1 zur Verfügung, deren Kartuschen 2 bzw. Reservoirs 6 zur Erzeugung verschiedener Getränke 70 mit unterschiedlichen Getränkesubstanzen 7 befüllt sind. Wenn der Anwender des Systems 1 ein bestimmtes Getränk 70 trinken möchte, braucht er lediglich aus der Mehrzahl der unterschiedlichen Kartuschensysteme 1 dasjenige Kartuschensystem 1, welche die entsprechende Getränkesubstanz 7 zur Erzeugung des gewünschten Getränks 70 enthält, auswählen, in eine Halteeinheit 90 der Getränkezubereitungsmaschine 3 einsetzen und den Getränkeherstellungsprozess an der Getränkezubereitungsmaschine 3 ggf. starten, beispielsweise durch Drücken eines Startknopfs, entsprechendes Berühren eines berührungssensitiven Displays, durch Gestik- oder Sprachsteuerung oder mittels einer geeigneten Applikation auf einem Mobiltelefon. Denkbar ist auch, dass der Getränkeherstellungsprozess automatisch startet, wenn das Einlegen eines neuen Kartuschensystems 1 in die Halteeinheit 90 erkannt wird. In jedem der vorgenannten Fälle wird das gewünschte Getränk 70 sodann automatisch erzeugt, in ein Trinkgefäß geleitet und dem Anwender somit bereitgestellt. Anschließend wird das verbrauchte Kartuschensystem 1 entfernt und entsorgt. Die Getränkezubereitungsmaschine 3 ist nun wieder bereit, um mit einem beliebigen neuen Kartuschensystem 1 befüllt zu werden, um ein weiteres Getränk 70 zu erzeugen.

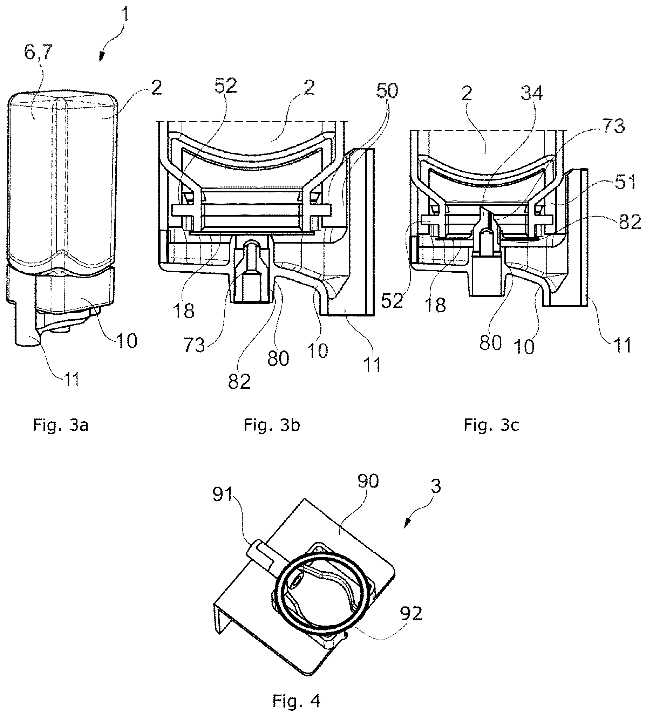

Die Halteeinheit 90 weist ein Lichtelement 92 (der Übersichtlichkeit halber nicht gezeichnet) auf, welches die eingelegte Kartuschenaufnahme 10 umschließt. Das von dem Lichtelement 92 abgestrahlte Licht beleuchtet die Kartusche 2, das Reservoir 6 und die Getränkesubstanz 7. Die Halteeinheit 90 und das Kartuschensystem 1 werden beim Einsetzen der Kartuschenaufnahme 10 so ausgeleuchtet, dass der Benutzer vom abgestrahlten Licht zum richtigen Einsetzen der Kartuschenaufnahme 10 geleitet wird. Bei eingesetzter Kartuschenaufnahme 10 beleuchtet das Lichtelement 92 das Reservoir 6 so, dass der Benutzer ungewollte Veränderungen der Getränkesubstanz 7, wie Ausflockungen oder Verfärbungen, erkennen kann. Eine detaillierte Darstellung des Lichtelementes 92 findet sich in Figur 4b.

Die Getränkesubstanz 7 umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-)Getränke.

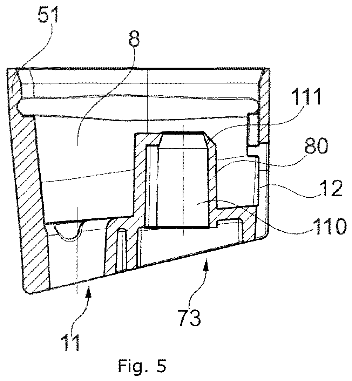

Das Kartuschensystem 1 umfasst eine Kartusche 2 in Form eines zylinderförmigen Behälters mit abgerundeten Ecken. Der Behälter ist hohl und beinhaltet somit ein Reservoir 6 für die Getränkesubstanz 7. Die Kartusche 2 ist insbesondere aus Kunststoff gefertigt und durch ein Blas-Spritzform-Verfahren hergestellt. Die Kartusche 2 weist ferner eine Kartuschenöffnung 63 auf, durch welche das Reservoir 6 mit der flüssigen Getränkesubstanz 7 befüllt wird. Der Boden des Reservoirs 6 ist beim Beispiel trichterförmig ausgebildet, wobei im Zentrum des trichterförmigen Bodens die Kartuschenöffnung 63 angeordnet ist. Die Kartusche 2 ist mit einer erfindungsgemäßen Kartuschenaufnahme 10 fest oder reversibel verbunden. Die Kartuschenaufnahme 10 wird insbesondere nach dem Befüllen der Kartusche 2 im Bereich der Kartuschenöffnung 63 auf die Kartusche 2 mittels einer Rastverbindung 50 verbunden. Die Kartuschenaufnahme 10 weist hierfür beispielsweise seitliche Rastelemente 51 in Form von elastischen Halteärmchen oder eine umlaufende Rastleiste 51 (Figur 5) auf, welche einen oder zwei im Bereich der Kartuschenöffnung 63 angeordnete umlaufende Halteflansche 52 der Kartusche 2 umgreift. Die Kartuschenaufnahme 10 wird nach dem Befüllen der Kartusche 2 auf die Kartusche 2 geclipst.

Die Kartuschenaufnahme 10 weist eine Mischkammer 8 auf, welche während des Getränkeherstellungsprozesses in Fluidverbindung mit dem Reservoir 6 steht, so dass mit Hilfe einer Kartuschenentladeeinrichtung 34 der Kartuschenaufnahme 10 die Getränkesubstanz 7 zumindest teilweise aus dem Reservoir 6 in die Mischkammer 8 überführt werden kann. Die Kartuschenentladeeinrichtung 34 umfasst zu diesem Zweck eine Druckluftleitung 40. Ein Ende der Druckluftleitung 40 ist mit einem Druckluftanschluss 42 verbunden, der mit einer Druckluftquelle 41 der Getränkezubereitungsmaschine 3 verbunden werden kann, um Druckluft in die Druckluftleitung 40 einzuleiten, während das andere Ende in einen Druckluftauslass 43 mündet, der in Richtung des Reservoirs 6 geöffnet ist und Druckluft in das Reservoir 6 einleitet. Das Einleiten der Druckluft bewirkt, dass die Getränkesubstanz 7 in die Mischkammer 8 gedrückt wird.

In die Mischkammer 8 mündet ferner eine Fluidzuführung 12 der Kartuschenaufnahme 10, welche durch eine Fluidquelle 91 der Getränkezubereitungsmaschine 3 gespeist wird. Denkbar ist, dass die Fluidzuführung 12 eine Schnellkupplung aufweist, mit welcher die Fluidzuführung 12 an die Fluidquelle 91 der Getränkezubereitungsmaschine 3 angeschlossen werden kann. Die Schnellkupplung kann beispielsweise derart ausgebildet sein, dass beim Einsetzen des Kartuschensystems 1 in die Halteeinheit 90 automatisch eine Fluidverbindung zwischen der Fluidquelle 91 und der Mischkammer 8 über die Fluidzuführung 12 hergestellt wird. Während des Getränkeherstellungsprozesses gelangt über diese Fluidverbindung Fluid, insbesondere gekühltes und karbonisiertes Trinkwasser, von der Fluidzuführung 12 in die Mischkammer 8. Ferner gelangt während des Getränkeherstellungsprozesses Getränkesubstanz 7 von dem Reservoir 6 in die Mischkammer 8, wie vorstehend beschrieben. Durch Vermischung der Getränkesubstanz 7 mit dem Fluid in der Mischkammer 8 bildet sich das Getränk 70, welches die Mischkammer 8 sodann durch einen Getränkeauslauf 11 verlässt.

Die Kartuschenaufnahme 10 weist den Getränkeauslauf 11 auf, durch welchen das innerhalb der Mischkammer 8 erzeugte Getränk 70 die Mischkammer 8 verlässt und insbesondere direkt in das Trinkgefäß (nicht abgebildet) geleitet wird, d.h. ohne dass Teile der Getränkezubereitungsmaschine 3 in Kontakt mit dem Getränk 70 gelangen. Auf diese Weise wird Rückkontamination der Getränkezubereitungsmaschine 3 verhindert. Das Trinkgefäß wird insbesondere direkt unterhalb des Getränkeauslaufs 11 angeordnet.

Nach Beendigung des Getränkeherstellungsprozesses wird das Kartuschensystem 1 aus der Halteeinheit 90 entnommen, so dass die Getränkeherstellungsmaschine 3 mit einem neuen und unverbrauchten Kartuschensystem 1 bestückt werden kann. Die Kartuschenaufnahme 10 kann wiederverwendet werden, indem es von der benutzten Kartusche 2 abgetrennt und auf eine neue Kartusche 2 geclipst wird.

In **Figuren 3a bis 3c** sind schematische Ansichten einer Kartuschenaufnahme 10 und eines Kartuschensystems 1 gemäß einer beispielhaften Ausführungsform der vorliegenden Erfindung illustriert.

Die Kartuschenaufnahme 10 weist eine Dornführung 80 auf, in welcher ein Aufstechdorn 73 verschiebbar gelagert ist. Das Dichtelement 18 wird durch eine Überführung des verschiebbaren Aufstechdorns 73 zwischen einer eingefahrenen Position, in welcher der Aufstechdorn 73 von dem Dichtelement 18 beabstandet ist (Vgl. Figur 3b), und einer ausgefahrenen Position, in welcher der Aufstechdorn 73 das Dichtelement 18 durchsticht (Vgl. Figur 3c) und bis in die Kartuschenöffnung 63 bzw. in das Reservoir 6 ragt, perforiert.

Die Außenwandung des Aufstechdorns 73 ist mit der Mehrzahl von Seitenkanälen zum Leiten der Getränkesubstanz 7 vom Reservoir 6 in Richtung der Mischkammer 8, wenn das Dichtelement 18 durchstochen ist, versehen. Die Seitenkanäle sind in Form von parallel zueinander verlaufenden einseitig offenen Nuten ausgebildet. Nach dem Durchstechen des Dichtelements 18 gelangen die Seitenkanäle in Fluidverbindung mit dem Reservoir 6, so dass die Getränkesubstanz 7 die Ränder des durchstochenen Dichtelements 18 in Richtung der Mischkammer 8 umfließen kann.

Der Querschnitt der Seitenkanäle und/oder die Anzahl der Seitenkanäle ist dabei vorzugsweise an die Viskosität der Getränkesubstanz 7 angepasst ist, so dass die Seitenkanäle den Fluss der Getränkesubstanz 7 in Richtung Mischkammer 8 kontrollieren bzw. begrenzen. Bei einer hohen Viskosität werden mehrere Seitenkanäle und/oder Seitenkanäle mit größerem Querschnitt verwendet, während bei einer niedrigeren Viskosität weniger Seitenkanäle und/oder Seitenkanäle mit geringerem Querschnitt vorgesehen sind.

In den Aufstechdorn 73 ist ferner die Druckluftleitung 40 integriert, welche als Kartuschenentladeeinrichtung 34 fungiert. Die Druckluftleitung 40 mündet durch eine feststehende Druckluftspitze am Ende des Aufstechdorns 73 in die Kartuschenöffnung 63, wenn sich der Aufstechdorn 73 in der ausgefahrenen Position befindet. Die Druckluftspitze ragt also automatisch in die Kartuschenöffnung 63, wenn der Aufstechdorn 73 in die ausgefahrene Position verschoben wurde und infolgedessen das Dichtelement 18 durchstochen hat.

An einer dem Reservoir 6 insbesondere abgewandten Seite des Aufstechdorns 73 ist der Druckluftanschluss 42 ausgebildet, der somit von außerhalb der Kartuschenaufnahme 10 zugänglich und an die Druckluftquelle 41 der Getränkezubereitungsmaschine 3 anschließbar ist. Vorzugsweise wird der Aufstechdorn 73 beim oder nach dem Einsetzen des Kartuschensystems 10 in die Getränkezubereitungsmaschine 3 oder nach dem Starten des Getränkeherstellungsprozesses von der eingefahrenen Position in die ausgefahrene Position überführt, vorzugsweise durch ein feststehendes Auslöseelement der Halteeinheit 90, gegen welches der Aufstechdorn 73 gedrückt wird.

Es ist vorzugsweise vorgesehen, dass sowohl die Fluidquelle 91 als auch die Druckluftquelle 41 direkt an die Fluidzuführung 12 bzw. den Druckluftanschluss 42 angekoppelt werden, sobald das Kartuschensystem 1 in die Getränkezubereitungsmaschine 3 eingesetzt wird oder ein Getränkeherstellungsprozess gestartet wird und insbesondere bevor das Dichtelement 18 durchstochen wird. Auf diese Weise wird eine Rückkontamination in Richtung der Getränkezubereitungsmaschine 3 wirksam vermieden, weil die Fluidzuführung 12 und die Kartuschenentladeeinrichtung 34 sofort beim Einsetzen des Kartuschensystems 1 unter Überdruck stehen und somit verhindert wird, dass Getränkesubstanz 7 in Richtung der Fluidquelle 91 bzw. Druckluftquelle 41 wandert. Die Getränkesubstanz 7 kann sich ausgehend vom Reservoir 6 somit lediglich in Richtung der Mischkammer 8 bewegen, sobald das Dichtelement 18 geöffnet wird.

In **Figur 4** ist eine Detailansicht der Halteeinheit 90 gezeigt, welche im Wesentlichen aus einer Aufnahme für die Kartuschenaufnahme 10 und einem Lichtelement 92 besteht, sowie eine zur Fluidquelle 91 der Getränkezubereitungsmaschine 3 laufende Leitung zum Anschluss an die Fluidzuführung des Kartuschensystems 1 umfasst.

Das Lichtelement 92, welches die Kartuschenaufnahme 10 in umschließt wenn diese eingesetzt ist weist eine Mehrzahl von verschiedenfarbigen LEDs auf, welche in Abhängigkeit davon ob eine eine Kartuschenaufnahme 10 eingelegt ist in Helligkeit und Farbkomposition gesteuert werden.

Die Halteeinheit 90 weist insbesondere einen Befestigungsflansch (nicht dargestellt) auf, welcher die Kartuschenaufnahme 10 nach dem Einsetzen in die Halteeinheit 90 formschlüssig umgreift. Die Halteeinheit 90 ist vorzugsweise manuell bedienbar, beispielsweise über einen Bedienhebel. Wenn ein Benutzer den Bedienhebel betätigt, wird die Kartuschenaufnahme 10 relativ zur Getränkezubereitungsmaschine 3 derart bewegt, dass das äußere Ende des Aufstechdorns 73 gegen ein feststehendes Auslöseelement (nicht dargestellt) der Halteeinheit 90 gedrückt wird, wodurch sich der Aufstechdorn 73 von der eingefahrenen Position in die ausgefahrene Position bewegt und das Dichtelement perforiert.

Die **Figur** 5 zeigt eine schematische Ansicht einer Kartuschenaufnahme 10 einer beispielshaften Ausführungsform der vorliegenden Erfindung. Die Kartuschenaufnahme 10 weist beidseitig eine zumindest teilweise umlaufende Rastleiste 51 auf, mit welcher die Kartuschenaufname 10 auf die Halteflansche 52 der Kartusche 2 aufgeclipst wird. Ferner weist die Kartuschenaufnahme 10 eine Mischkammer 8 auf, in welche an ihrer rückwärtigen Seite die Fluidzuführung 12 in Form einer einfachen Durchgangsöffnung in der Wandung der Kartuschenaufnahme 10 ausgebildet ist. An der Vorderseite ist im Boden der Mischkammer 8 der Getränkeauslauf 11 ausgebildet. Der Boden der Mischkammer 8 bildet in Richtung des Getränkeauslaufs 11 eine sich stetig vertiefende Vertiefung, so dass nach Beendigung des Getränkeherstellungsprozesses keine Flüssigkeitsrückstände in der Mischkammer 8 verbleiben. Nahezu mittig innerhalb der Mischkammer 8 ist in der Figur 5 zudem die Dornführung 80 zu sehen.

Die Dornführung 80 umfasst ein Führungsteil mit einem innenliegenden Führungskanal 110, in welchem der Aufstechdorns 73 verschiebbar aufgenommen ist. Der Führungskanal 110 ist im Wesentlichen zylinderförmig ausgebildet ist und steht nahezu senkrecht vom Boden der Mischkammer 8 in Richtung der Kartusche 2 hervor. An einem der Kartusche 2 zugewandten Ende des Führungsteils ist ein umlaufender Anschlag 111 mit verringertem Durchmesser ausgebildet, an welchem der umlaufende Absatz des Aufstechdorns 73 anschlägt, wenn der Aufstechdorn 73 in der ausgefahrenen Position ankommt. Der Anschlag begrenzt somit die Bewegung des Aufstechdorns 73 in Richtung des Reservoirs 6. Auf dem Boden der Mischkammer 8 sind optional Mischstrukturen angeordnet.

In der Figur 5 ist aus Gründen der Übersichtlichkeit der Aufstechdorn 73 nicht dargestellt.

### Bezugszeichenliste

- 1: Kartuschensystem
- 2: Kartusche
- 3: Getränkezubereitungsmaschine
- 6: Reservoir
- 7: Getränkesubstanz
- 8: Mischkammer
- 10: Kartuschenaufnahme
- 11: Getränkeauslauf
- 12: Fluidzuführung
- 18: Dichtelement
- 34: Kartuschenentladeeinrichtung
- 40: Druckluftleitung
- 41: Druckluftquelle
- 42: Druckluftanschluss
- 43: Druckluftauslass
- 50: Rastverbindung
- 51: Rastelemente/Rastleiste
- 52: Halteflansch
- 63: Kartuschenöffnung
- 70: Getränk
- 73: Aufstechdorn
- 80: Dornführung
- 90: Halteeinheit
- 91: Fluidquelle
- 92: Lichtelement
- 110: Führungskanal
- 111: Anschlag
- 120: Handhebel

## Patentansprüche

1. Getränkezubereitungsmaschine (3) zur Herstellung eines Getränks (70), in welche ein Kartuschensystem (1) mit einer Kartusche (2) und einer mit der Kartusche (2) verbundenen Kartuschenaufnahme (10) einsetzbar ist, wobei die Getränkezubereitungsmaschine (3) ferner eine Halteeinheit (90), in welche die mit der Kartusche (2) verbundene Kartuschenaufnahme (10) einsetzbar ist, aufweist, **dadurch gekennzeichnet, dass** die Halteeinheit (90) ein Lichtelement (92) aufweist, welches derart ausgebildet ist, dass das Lichtelement (92) die in der Halteeinheit (90) aufgenommene Kartuschenaufnahme (10) zumindest teilweise umschließt, wobei das Lichtelement (92) einen Leuchtstreifen und insbesondere ein LED-Streifen umfasst.

2. Getränkezubereitungsmaschine nach Anspruch 1, wobei das Lichtelement (92) die in der Halteeinheit (90) aufgenommene Kartuschenaufnahme (10) vollständig umschließt, wobei sich das umlaufende Lichtelement (92) dabei insbesondere innerhalb einer zur Längsachse der Kartusche (1) senkrechten Horizontalebene erstreckt.

3. Getränkezubereitungsmaschine nach einem der vorhergehenden Ansprüche, wobei das Lichtelement (92) eine Mehrzahl von LEDs aufweist, insbesondere LEDs unterschiedlicher Farben.

4. Getränkezubereitungsmaschine nach einem der vorhergehenden Ansprüche, wobei die Getränkezubereitungsmaschine einen Kennungsdetektor (39) zum Auslesen einer Produktidentifikationskennung (38) auf der Kartusche (1) und/oder der Kartuschenaufnahme (10) aufweist, wobei der Kennungsdetektor (39) vorzugsweise oberhalb und/oder hinter der Halterung (24) angeordnet ist.

5. Getränkezubereitungsmaschine nach Anspruch 4, wobei das Lichtelement (92) derart ausgebildet, angeordnet und/oder ausgerichtet ist, dass ein vom Lichtelement (92) ausgehender Lichtkegel einen Erfassungsbereich des Kennungsdetektors (39) und insbesondere die auf der Kartusche (1) und/oder der Kartuschenaufnahme (10) ausgebildete Produktidentifikationskennung (38) ausleuchtet.

6. Getränkezubereitungsmaschine nach einem der vorhergehenden Ansprüche, wobei das Lichtelement (92) derart ausgebildet, angeordnet und/oder ausgerichtet ist, dass ein vom Lichtelement (92) ausgehender Lichtkegel die Kartusche (2) und insbesondere das Reservoir (6) ausleuchtet.

7. Getränkezubereitungsmaschine nach einem der Ansprüche 4 bis 6, wobei die Getränkezubereitungsmaschine eine Steuereinheit aufweist, welche das Lichtelement (92) in Abhängigkeit einer vom Kennungsdetektor (39) ausgelesenen Produktidentifikationskennung (38) steuert.

8. System aufweisend eine Getränkezubereitungsmaschine nach einem der voranstehenden Ansprüche und ein in die Halteeinheit (90) einsetzbares Kartuschensystem (1) mit einer Kartusche (2) und einer mit der Kartusche (2) verbundenen Kartuschenaufnahme (10).

9. System nach Anspruch 8, wobei die Kartusche (10) eine Produktidentifikationskennung (38) aufweist, die insbesondere in einen Barcode, einen RFID-Code, einen QR-Code, einen Data-Matrix-Code, einen Farbcode oder einen Hologrammcode eingebettet ist.

10. Verfahren zur Herstellung eines Getränks (70) mit einem System (1) nach einem der Ansprüche 8 oder 9, mit den folgenden Schritten:
- Einsetzen des Kartuschensystems (1) in die Halteeinheit (90) der Getränkezubereitungsmaschine (3),
- Ausleuchten des Reservoirs und/oder der Produktidentifikationskennung (38) mittels des Lichtelements (92),
- Herstellen einer Fluidverbindung zwischen einer Fluidquelle (91) der Getränkezubereitungsmaschine (3) und der Fluidzuführung (12) der Kartuschenaufnahme (10),
- Herstellen einer Druckluftverbindung zwischen einer Druckluftquelle (41) der Getränkezubereitungsmaschine (3) und des Druckluftanschlusses (42) der Kartuschenaufnahme (10),
- Perforieren des Dichtelements (18) durch Überführen des Aufstechdorns (73) von der eingefahrenen Position in die ausgefahrene Position,
- Überführen der Getränkesubstanz (7) von dem Reservoir (6) in die Mischkammer (8) durch Einspeisen von Druckluft in das Reservoir (12),
- Einspeisen eines Fluides in die Mischkammer (8) durch die Fluidzuführung (12) und
- Ableiten des in der Mischkammer (8) durch Vermischung der Getränkesubstanz (7) mit dem Fluid erzeugten Getränks (70) mittels eines Getränkeauslaufs (11).

11. Verfahren nach Anspruch 10, wobei vor dem Herstellen der Fluid- und/oder Druckluftverbindung und/oder vor dem Perforieren des Dichtelements eine Produktidentifikationskennung (38) von einem Kennungsdetektor (39) ausgelesen und von einer Steuerungseinheit ausgewertet und insbesondere verifiziert wird, wobei vorzugsweise die Produktidentifikationskennung (38) während des Auslesens von dem Lichtelement (92) ausgeleuchtet wird.

12. Verfahren nach einem der Ansprüche 10 oder11, wobei der Aufstechdorn (73) von einem Auslöseelement der Getränkezubereitungsmaschine (3) von der eingefahrenen Position in die ausgefahrene Position überführt wird, wobei die Kartuschenaufnahme (10) vorzugsweise derart gegen das feststehende Auslöseelement bewegt wird, dass der Aufstechdorn (73) von der eingefahrenen Position in die ausgefahrene Position überführt wird.

13. Verfahren nach einem der Ansprüche 10 bis 12, wobei das Lichtelement (92) erst eingeschaltet oder auf eine bestimmte Farbe oder Helligkeit geschaltet wird, wenn das Kartuschensystem in die Halteinheit (90) eingesetzt oder in der Halteeinheit (90) verriegelt wird.

14. Verfahren nach einem der Ansprüche 10 bis 13, wobei das Lichtelement (92) und insbesondere die Farbe und/oder Helligkeit des Lichtelements (92) in Abhängigkeit der Auswertung der Produktidentifikationskennung durch die Steuerungseinheit geschaltet wird.

## Claims

1. Beverage preparation machine (3) for producing a beverage (70), into which a cartridge system (1) with a cartridge (2) and a cartridge receptacle (10) connected to the cartridge (2) can be inserted, wherein the beverage preparation machine (3) further comprises a holding unit (90) into which the cartridge receptacle (10) connected to the cartridge (2) can be inserted, **characterized in that** the holding unit (90) has a light element (92) which is designed such that the light element (92) at least partially surrounds the cartridge receptacle (10) received in the holding unit (90), wherein the light element (92) comprising a light strip and, in particular, an LED strip.

2. Beverage preparation machine according to claim 1, wherein the light element (92) completely encloses the cartridge receptacle (10) received in the holding unit (90), wherein the surrounding light element (92) extends in particular within a horizontal plane perpendicular to the longitudinal axis of the cartridge (1).

3. Beverage preparation machine according to one of the preceding claims, wherein the light element (92) has a plurality of LEDs, in particular LEDs of different colors.

4. Beverage preparation machine according to one of the preceding claims, wherein the beverage preparation machine has an identification detector (39) for reading a product identification code (38) on the cartridge (1) and/or the cartridge receptacle (10), wherein the identification detector (39) is preferably arranged above and/or behind the holder (24).

5. Beverage preparation machine according to claim 4, wherein the light element (92) is designed, arranged, and/or aligned such that a light cone emanating from the light element (92) illuminates a detection area of the identification detector (39) and, in particular, the product identification identifier (38) formed on the cartridge (1) and/or the cartridge receptacle (10).

6. Beverage preparation machine according to one of the preceding claims, wherein the light element (92) is designed, arranged, and/or aligned such that a light cone emanating from the light element (92) illuminates the cartridge (2) and, in particular, the reservoir (6).

7. Beverage preparation machine according to one of claims 4 to 6, wherein the beverage preparation machine has a control unit which controls the light element (92) in dependence on a product identification code (38) read out by the identification detector (39).

8. System comprising a beverage preparation machine according to one of the preceding claims and a cartridge system (1) insertable into the holding unit (90) with a cartridge (2) and a cartridge receptacle (10) connected to the cartridge (2).

9. System according to claim 8, wherein the cartridge (10) has a product identification code (38) that is embedded in particular in a barcode, an RFID code, a QR code, a data matrix code, a color code, or a hologram code.

10. Method for producing a beverage (70) using a system (1) according to one of claims 8 or 9, comprising the following steps:
- Inserting the cartridge system (1) into the holding unit (90) of the beverage preparation machine (3),
- Illuminating the reservoir and/or the product identification identifier (38) using the light element (92),
- Establishing a fluid connection between a fluid source (91) of the beverage preparation machine
(3) and the fluid supply (12) of the cartridge receptacle (10),
- Establishing a compressed air connection between a compressed air source (41) of the beverage preparation machine (3) and the compressed air connection (42) of the cartridge receptacle (10),
- Perforating the sealing element (18) by moving the piercing mandrel (73) from the retracted position to the extended position,
- transferring the beverage substance (7) from the reservoir (6) into the mixing chamber (8) by feeding compressed air into the reservoir (12),
- feeding a fluid into the mixing chamber (8) through the fluid supply (12), and
- Discharging the beverage (70) produced in the mixing chamber (8) by mixing the beverage substance (7) with the fluid by means of a beverage outlet (11).

11. Method according to claim 10, wherein, before establishing the fluid and/or compressed air connection and/or before perforating the sealing element, a product identification code (38) is read out by an identification detector (39) and evaluated and, in particular, verified by a control unit, wherein the product identification code (38) is preferably illuminated by the light element (92) during the reading process.

12. Method according to one of claims 10 or 11, wherein the piercing spike (73) is moved from the retracted position to the extended position by a release element of the beverage preparation machine (3) from the retracted position to the extended position, wherein the cartridge receptacle (10) is preferably moved against the fixed release element in such a way that the piercing spike (73) is moved from the retracted position to the extended position.

13. Method according to one of claims 10 to 12, wherein the light element (92) is only switched on or switched to a specific color or brightness when the cartridge system is inserted into the holding unit (90) or locked in the holding unit (90).

14. Method according to one of claims 10 to 13, wherein the light element (92) and, in particular, the color and/or brightness of the light element (92) is switched depending on the evaluation of the product identification code by the control unit.

## Revendications

1. Machine de préparation de boissons (3) pour la fabrication d'une boisson (70), dans laquelle un système de cartouche (1) avec une cartouche (2) et un réceptacle de cartouche (10) relié à la cartouche (2), la machine de préparation de boissons (3) comportant en outre une unité de maintien (90) dans laquelle peut être inséré le réceptacle de cartouche (10) relié à la cartouche (2), **caractérisée en ce que** l'unité de maintien (90) comprend un élément lumineux (92) qui est conçu de telle sorte que l'élément lumineux (92) entoure au moins partiellement le logement de cartouche (10) logé dans l'unité de maintien (90), l'élément lumineux (92) comprend une bande lumineuse et en particulier une bande LED.

2. Machine de préparation de boissons selon la revendication 1, dans laquelle l'élément lumineux (92) entoure complètement le logement de cartouche (10) logé dans l'unité de support (90), l'élément lumineux périphérique (92) s'étendant en particulier à l'intérieur d'un plan horizontal perpendiculaire à l'axe longitudinal de la cartouche (1).

3. Machine de préparation de boissons selon l'une des revendications précédentes, dans laquelle l'élément lumineux (92) comporte une pluralité de LED, en particulier des LED de différentes couleurs.

4. Machine de préparation de boissons selon l'une des revendications précédentes, la machine de préparation de boissons comportant un détecteur d'identification (39) pour lire un identifiant de produit (38) sur la cartouche (1) et/ou du support de cartouche (10), le détecteur d'identification (39) étant de préférence disposé au-dessus et/ou derrière le support (24).

5. Machine de préparation de boissons selon la revendication 4, dans laquelle l'élément lumineux (92) est conçu, disposé et/ou orienté de telle sorte qu'un cône lumineux émis par l'élément lumineux (92) éclaire une zone de détection du détecteur d'identification (39) et en particulier le code d'identification du produit (38) formé sur la cartouche (1) et/ou le logement de cartouche (10).

6. Machine de préparation de boissons selon l'une des revendications précédentes, dans laquelle l'élément lumineux (92) est conçu, disposé et/ou orienté de telle sorte qu'un cône lumineux émis par l'élément lumineux (92) éclaire la cartouche (2) et en particulier le réservoir (6).

7. Machine de préparation de boissons selon l'une des revendications 4 à 6, la machine de préparation de boissons comportant une unité de commande qui commande l'élément lumineux (92) en fonction d'un identifiant de produit (38) lu par le détecteur d'identifiant (39).

8. Système comprenant une machine de préparation de boissons selon l'une des revendications précédentes et un système de cartouche (1) pouvant être inséré dans l'unité de maintien (90) avec une cartouche (2) et un logement de cartouche (10) relié à la cartouche (2).

9. Système selon la revendication 8, dans lequel la cartouche (10) comporte un identifiant de produit (38) qui est notamment intégré dans un code-barres, un code RFID, un code QR, un code Data Matrix, un code couleur ou un code holographique.

10. Procédé de préparation d'une boisson (70) à l'aide d'un système (1) selon l'une des revendications 8 ou 9, comprenant les étapes suivantes :
- insertion du système de cartouche (1) dans l'unité de maintien (90) de la machine de préparation de boissons (3),
- Éclairage du réservoir et/ou de l'identifiant du produit (38) à l'aide de l'élément lumineux (92),
- établissement d'une connexion fluidique entre une source de fluide (91) de la machine de préparation de boissons
(3) et l'alimentation en fluide (12) du logement de cartouche (10),
- Établissement d'une connexion d'air comprimé entre une source d'air comprimé (41) de la machine de préparation de boissons (3) et le raccord d'air comprimé (42) du logement de cartouche (10),
- perforation de l'élément d'étanchéité (18) par transfert du mandrin de perforation (73) de la position rentrée à la position sortie,
- transfert de la substance de boisson (7) du réservoir (6) dans la chambre de mélange (8) par injection d'air comprimé dans le réservoir (12),
- alimentation d'un fluide dans la chambre de mélange (8) par l'alimentation en fluide (12) et
- Évacuation de la boisson (70) produite dans la chambre de mélange (8) par mélange de la substance de boisson (7) avec le fluide au moyen d'un bec verseur (11).

11. Procédé selon la revendication 10, dans lequel, avant d'établir la connexion de fluide et/ou d'air comprimé et/ou avant de perforer l'élément d'étanchéité, un identifiant de produit (38) est lu par un détecteur d'identifiant (39) et évalué et en particulier vérifié par une unité de commande, l'identifiant d'identification de produit (38) étant de préférence éclairé par l'élément lumineux (92) pendant la lecture.

12. Procédé selon l'une des revendications 10 ou 11, dans lequel le mandrin de perçage (73) est transféré par un élément de déclenchement de la machine de préparation de boissons (3) de la position rentrée à la position sortie, le logement de cartouche (10) étant de préférence déplacé contre l'élément de déclenchement fixe de telle sorte que le mandrin de perçage (73) passe de la position rentrée à la position sortie.

13. Procédé selon l'une des revendications 10 à 12, dans lequel l'élément lumineux (92) n'est allumé ou réglé sur une couleur ou une luminosité déterminée que lorsque le système de cartouche est inséré dans l'unité de maintien (90) ou verrouillé dans l'unité de maintien (90).

14. Procédé selon l'une des revendications 10 à 13, dans lequel l'élément lumineux (92) et en particulier la couleur et/ou la luminosité de l'élément lumineux (92) sont commutés en fonction de l'évaluation de l'identifiant d'identification du produit par l'unité de commande.
